# FASCICULE DE BREVET EUROPEEN

(11) **EP 4 219 308 B1**
(45) Date de publication et mention de la délivrance du brevet: **15.01.2025**
(21) Numéro de dépôt: 23153525.3
(22) Date de dépôt: 26.01.2023
(51) Int. Cl.: B64D 11/06, B60N 2/42, B60N 2/24, B60N 2/427

(54) **SIÈGE D'AÉRONEF AGENCÉ POUR AMORTIR UN CHOC VERTICAL**
FLUGZEUGSITZ ZUR DÄMPFUNG EINES VERTIKALEN AUFPRALLS
AIRCRAFT SEAT ARRANGED TO DAMP A VERTICAL SHOCK

(30) Priorité: 01.02.2022 FR 2200878
(43) Date de publication de la demande: 02.08.2023
(73) Titulaire: Expliseat, 75011 Paris (FR)
(72) Inventeur: BARBEROT, Amaury, 94120 FONTENAY-SOUS-BOIS (FR); CHEVRIER, Thomas, 75116 PARIS (FR); JACOB, Christophe, 94410 SAINT-MAURICE (FR)
(74) Mandataire: Brevalex

(56) Documents cités:
- CN-A- 103 347 734
- JP-A- 2013 163 452
- US-A1- 2011 043 008
- US-A1- 2013 049 415
- US-A1- 2014 232 166
- US-A1- 2021 138 938

## Description

### DOMAINE TECHNIQUE

L'invention concerne un siège d'aéronef capable d'amortir un choc vertical afin de réduire les dommages pour son occupant dans un tel cas, ce siège étant destiné à équiper notamment un hélicoptère.

### ÉTAT DE LA TECHNIQUE ANTÉRIEURE

D'une manière générale, les sièges d'aéronefs doivent passer avec succès des tests permettant de certifier qu'un certain niveau de sécurité des personnes transportées est assuré en cas d'accident ou de crash ou bien d'atterrissage d'urgence.

Dans le cas des sièges d'hélicoptères, l'un de ces tests consiste à déterminer si le siège est capable d'amortir un choc vertical d'intensité prédéterminée, pour limiter les dommages subis par son occupant dans une telle situation. Plus concrètement, ce test est prévu pour correspondre à un cas d'atterrissage vertical forcé, c'est-à-dire violent, de l'hélicoptère.

En pratique, le test est réalisé en installant dans le siège un mannequin équipé de capteurs d'efforts, et l'on applique à l'ensemble un choc vertical d'une intensité et d'une durée prédéterminées tout en mesurant les efforts subis par le mannequin dans la région des vertèbres lombaires durant ce choc. Le test est passé avec succès si les efforts lombaires mesurés durant le choc restent en deçà d'un seuil prédéterminé, qui correspond à une valeur maximale pour laquelle les efforts subis n'engendrent pas de lésions importantes dans la région lombaire.

Dans le cas des avions, les critères définissant le choc vertical correspondent à une accélération verticale de 14 g, c'est-à-dire 14 fois l'accélération de la pesanteur à la surface de la terre. En pratique, les sièges d'avions ne nécessitent pas d'aménagement particulier pour passer ce test.

Dans les cas des hélicoptères, le choc vertical appliqué durant le test correspond à 30 g, de sorte qu'il est au contraire indispensable que le siège soit spécifiquement agencé pour supporter et amortir un tel choc vertical en absorbant son énergie.

Pour permettre l'absorption d'un tel choc, une certaine distance de déplacement vertical du siège est autorisée, ce qui lui permet d'amortir l'intensité du choc appliqué, pour que le choc subi par son occupant soit de moindre intensité. Cette distance est généralement comprise entre 5 et 10 centimètres.

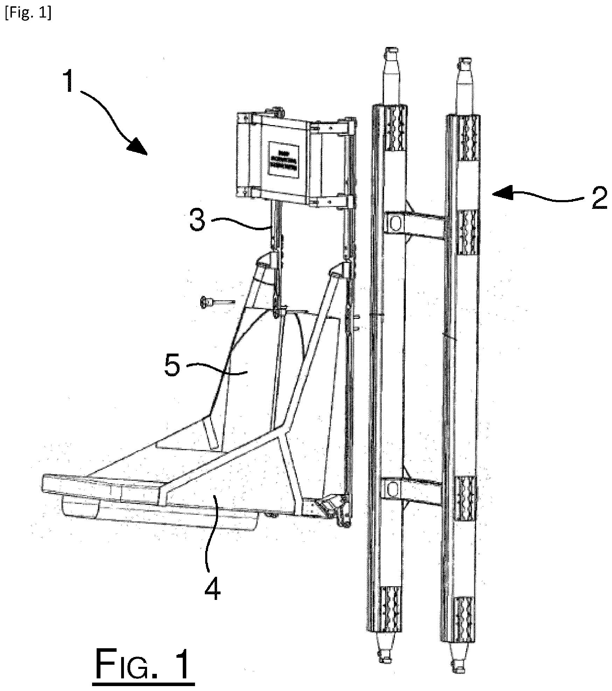

Sur la figure 1, on a représenté un siège d'hélicoptère 1 comportant une armature fixe 2 formée de deux montants rectilignes parallèles orientés verticalement, qui porte un chariot 3 auquel sont rigidement fixés une assise 4 et un dossier 5, ce chariot 3 étant apte à coulisser le long de l'armature 2.

En fonctionnement normal, le chariot est bloqué sur l'armature qui le porte, alors qu'en cas de choc vertical vers le bas d'intensité élevée le chariot 3 avec l'assise et le dossier se déplacent vers le bas le long de l'armature, de façon à amortir l'intensité du choc.

Le déplacement du chariot 3 le long de l'armature 2, est amorti par un système mécanique non représenté absorbant l'énergie du choc. Ce système d'amortissement peut être une pièce mécanique fusible qui se déforme plastiquement pour permettre le coulissement tout en absorbant son énergie. Il peut aussi s'agir d'un câble métallique se déformant sur un ensemble de rouleaux, ou de tout autre agencement permettant d'autoriser un déplacement tout en absorbant l'énergie mécanique induite par celui-ci, au moyen généralement d'une déformation irréversible d'un élément mécanique.

Ainsi, et comme visible sur la figure 1, la nécessité de devoir absorber un choc vertical d'intensité élevée conduit à une structure générale de siège beaucoup plus complexe et coûteuse que celle d'un siège classique.

D'une manière générale, les sièges connus des documents JP2013163452A et US20110043008A1 divulguent entre autres un agencement pour amortir un choc vertical, comprenant plusieurs sangles chacune comportant une portion d'amortissement, cette portion d'amortissement comprenant une partie repliée dans laquelle deux régions consécutives d'une même face de cette sangle se longent en étant solidarisées l'une à l'autre par des coutures. Le document US2021138398A1 divulgue plusieurs sangles chacune comportant une portion d'amortissement consistant de portions de sangle équipées de coutures frangibles d'absorption, et mentionne l'utilisation dans des aéronefs.

Le but de l'invention est de remédier à cette nécessité en apportant une conception de siège simple et capable d'amortir un tel choc vertical.

### EXPOSÉ DE L'INVENTION

A cet effet, l'invention a pour objet un siège d'aéronef, comprenant une assise incluant un coussin porté par une armature ainsi que des pieds portant cette armature, cette armature comprenant au moins deux poutres longeant deux bords opposés du coussin, le coussin étant porté par plusieurs sangles s'étendant d'une poutre à l'autre, dans lequel au moins une sangle comporte une portion d'amortissement, cette portion d'amortissement comprenant une partie repliée dans laquelle deux régions consécutives d'une même face de cette sangle se longent en étant solidarisées l'une à l'autre par des coutures, afin que ces coutures se rompent lorsque la sangle subit des efforts de tension élevés, et dans lequel au moins une sangle forme une boucle entourant deux poutres.

Avec cet agencement, un choc vertical vers le bas se traduit par un accroissement important de la tension de chaque sangle, engendrant la rupture progressive des coutures fusibles de la portion d'amortissement de chaque sangle tout en libérant de la longueur de sangle. L'énergie du choc est ainsi absorbée pour réduire son intensité au niveau des vertèbres lombaires de l'occupant du siège.

L'invention concerne également un siège ainsi défini, comprenant au moins une sangle équipée d'une attache reliant ses deux extrémités pour former une boucle.

L'invention concerne également un siège ainsi défini, dans lequel l'armature comporte deux poutres latérales et deux poutres transversales agencées selon une forme rectangulaire longeant les bords du coussin, et comprenant d'une part des sangles s'étendant d'une poutre transversale à l'autre, et d'autre part des sangles s'étendant d'une poutre latérale à l'autre.

L'invention concerne également un siège ainsi défini, comprenant au moins une sangle ayant une portion d'amortissement dont la partie repliée est rabattue le long du reste de cette sangle.

L'invention concerne également un siège ainsi défini, comprenant une sangle pourvue de plusieurs portions d'amortissement.

### BRÈVE DESCRIPTION DES DESSINS

La [Fig. 1] est une vue d'ensemble d'un siège d'hélicoptère selon l'Etat de la technique ;

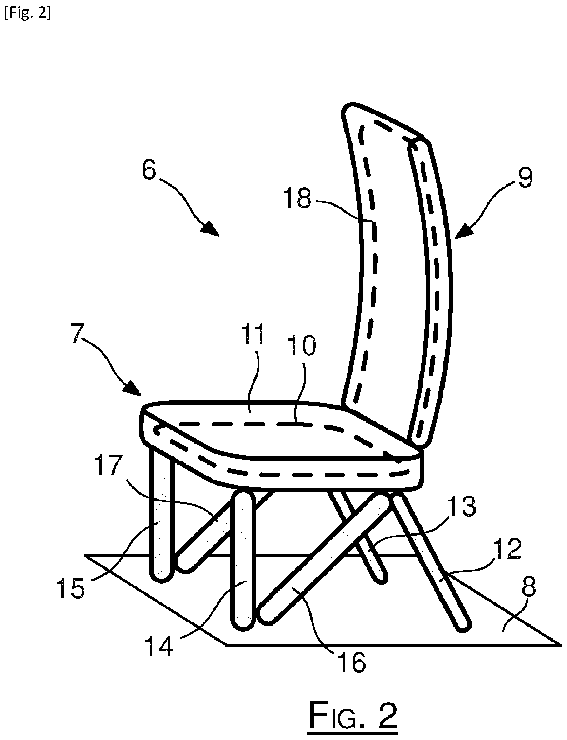

La [Fig. 2] est une vue d'ensemble du siège selon l'invention représenté en perspective ;
La [Fig. 3] est une vue de détail montrant en perspective une partie de sangle de l'assise du siège selon l'invention comprenant une portion d'amortissement à l'état normal ;
La [Fig. 4] est une vue latérale d'une portion d'amortissement d'une sangle d'assise du siège selon l'invention à l'état normal ;
La [Fig. 5] est une vue latérale d'une portion d'amortissement d'une sangle d'assise du siège selon l'invention en début d'amortissement de choc ;
La [Fig. 6] est une vue latérale d'une portion d'amortissement d'une sangle d'assise du siège selon l'invention durant un amortissement de choc ;
La [Fig. 7] est une vue latérale d'une portion d'amortissement d'une sangle d'assise du siège selon l'invention après amortissement d'un choc ;
La [Fig. 8] est une vue partielle montrant l'armature de l'assise du siège selon l'invention équipée d'une sangle à l'état normal ;
La [Fig. 9] est une vue partielle montrant l'armature de l'assise du siège selon l'invention équipée d'une sangle en début d'amortissement d'un choc ;
La [Fig. 10] est une vue partielle montrant l'armature de l'assise du siège selon l'invention équipée d'une sangle durant un amortissement de choc ;
La [Fig. 11] est une vue partielle montrant l'armature de l'assise du siège selon l'invention équipée d'une sangle après amortissement d'un choc ;
La [Fig. 12] est une vue partielle montrant l'armature de l'assise du siège selon l'invention équipée de plusieurs sangles à l'état normal ;
La [Fig. 13] est une vue partielle montrant l'armature de l'assise du siège selon l'invention équipée de plusieurs sangles en début d'amortissement d'un choc ;
La [Fig. 14] est une vue partielle montrant l'armature de l'assise du siège selon l'invention équipée de plusieurs sangles durant un amortissement de choc ;
La [Fig. 15] est une vue partielle montrant l'armature de l'assise du siège selon l'invention équipée de plusieurs sangles après amortissement d'un choc ;
La [Fig. 16] est une vue latérale du siège selon l'invention dans lequel est installé un occupant à l'état normal ;
La [Fig. 17] est une vue latérale du siège selon l'invention dans lequel est installé un occupant durant un amortissement de choc ;
La [Fig. 18] est une vue latérale du siège selon l'invention dans lequel est installé un occupant après amortissement d'un choc.

### EXPOSÉ DÉTAILLÉ DE MODES DE RÉALISATION PARTICULIERS

Sur la figure 1, un siège 6 d'aéronef comporte une assise 7 fixée à un plancher 8 et portant un dossier 9. L'assise 7 comporte une armature inférieure 10 formée de poutres assemblées pour constituer un cadre auquel sont fixées des pièces de mousse et de tissu formant un coussin 11 de cette assise. Ce siège 6 comporte encore des pieds par lesquels son assise 7 est rigidement solidarisée au plancher 8, ce pieds comportant ici deux pieds arrières 12, 13, deux pieds avant 14, 15, et deux pieds intermédiaires 16, 17.

Le dossier 9 comporte une armature supérieure 18 portant des pièces de tissu, et qui est portée par l'armature inférieure 10 de l'assise par l'intermédiaire d'attaches.

Selon l'invention, l'assise 7 est équipée de sangles qui comportent des portions d'amortissement dans lesquelles ces sangles sont repliées et cousues sur elles-mêmes, de telle sorte que lors d'un choc, les efforts de tension résultant de ce choc dans les sangles engendrent la déchirure progressive des coutures de leurs portions d'amortissement pour absorber l'énergie de ce choc.

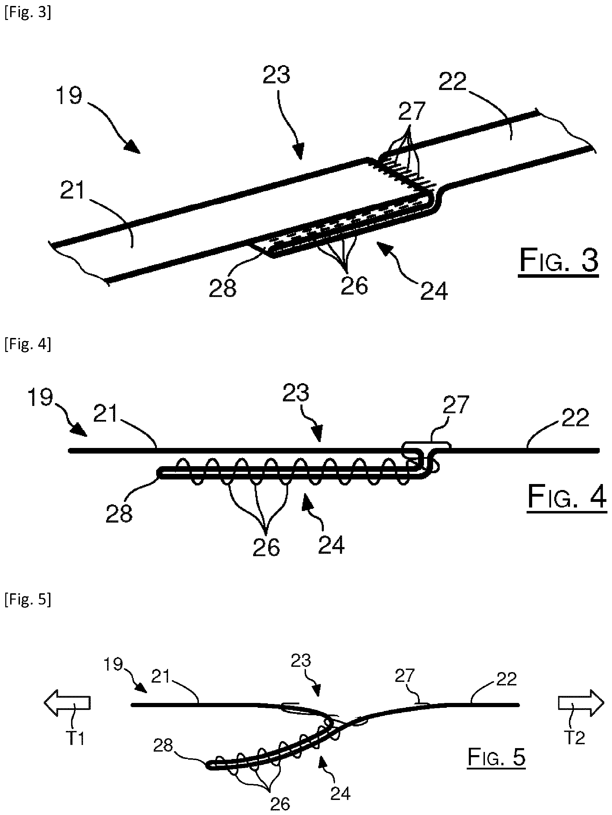

Sur les figures 3 et 4, une partie d'une sangle 19 formée d'un même tenant de tissu comporte une première et une seconde portions courantes 21, 22 reliées par une portion d'amortissement 23. On entend ici par un même tenant de tissu le fait que cette partie de sangle est formée d'une même bande de tissu au lieu d'être constituée de plusieurs bandes de tissus raccordées ou raboutées les unes aux autres.

Cette portion d'amortissement 23 comprend une partie repliée 24 dans laquelle deux régions consécutives d'une même face de la sangle se longent en étant solidarisées l'une à l'autre par des coutures 26. Cette partie repliée 24 est ici rabattue le long de la première portion courante 21 pour présenter un encombrement limité.

En terme de proportions, la partie repliée 24 a une longueur totale correspondant ici sensiblement au double de la largeur de la sangle 19, la largeur de la sangle étant en soi constante.

Lorsque la sangle 19 est soumise à des efforts de tension T1 et T2 appliqués à ses portions courantes selon des directions opposées à la portion d'amortissement 23, les points de coutures 27 situés à la jonction de la partie repliée 24 et des première et seconde portions courantes 21, 22 subissent en premier lieu ces efforts.

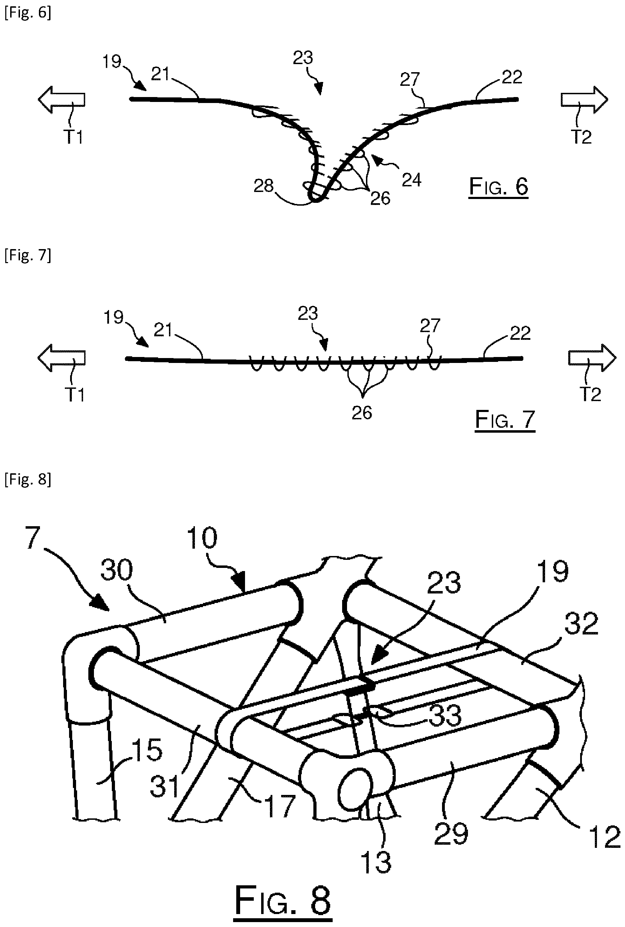

Comme ces points de coutures 27 présentent une résistance à la tension inférieure à celle de la sangle, lorsque ces efforts de tension T1 et T2 deviennent supérieurs à un seuil, lors de l'impact d'un choc, ces points de couture 27 cèdent, ce qui a pour effet de commencer à ouvrir la partie repliée 24. Dans ces conditions, et comme illustré sur la figure 5, la première portion 21 et la seconde portion 22 s'écartent l'une de l'autre, alors que la rupture des points de couture 27 absorbe une partie de l'énergie de l'impact de ce choc. Au fur et à mesure que le choc continue de s'exercer, c'est-à-dire durant le choc, le reste des coutures 26 cède progressivement, depuis les points de couture 27 vers ceux de l'extrémité libre 28 de la partie repliée 24. La partie repliée 24 continue alors de s'ouvrir en absorbant une partie de l'énergie du choc, et les première et seconde portions courantes 21, 22 continuent de s'écarter l'une de l'autre pour libérer de la longueur de sangle, ce qui correspond à la situation de la figure 6.

A la fin du choc, comme illustré sur la figure 7, la partie repliée 24 est complètement ouverte, de sorte que la sangle 19 s'étend de façon sensiblement incurvées vers le bas en ayant perdu toute sa tension.

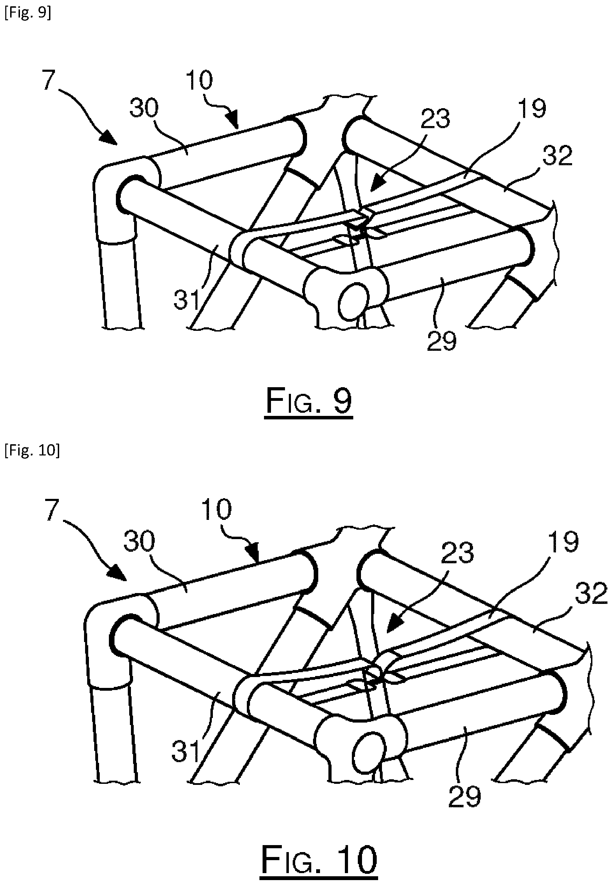

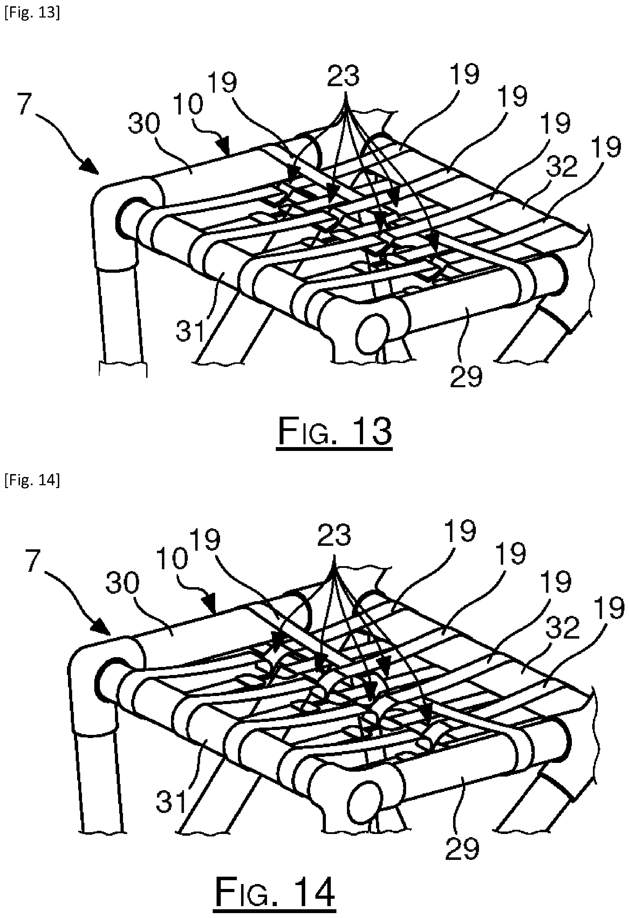

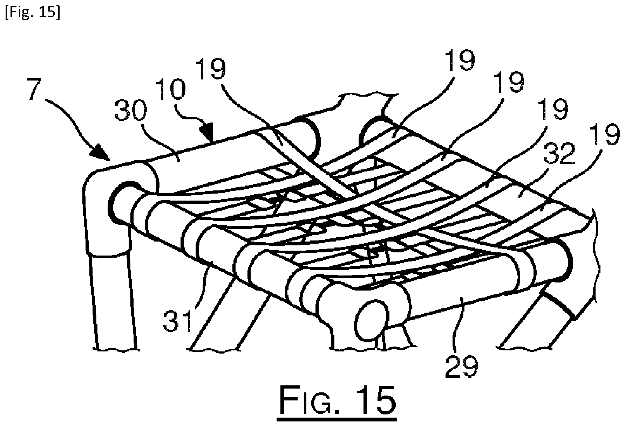

Comme visible sur les figures 8 à 15, l'armature 10 de l'assise 7 du siège 6 selon l'invention comporte deux poutres latérales 29 et 30 s'étendant longitudinalement, qui sont raccordée à une poutre transversale avant 31 et à une poutre transversale arrière 32. Ces poutres sont ici des poutres à section ronde, c'est-à-dire des tubes, pouvant être prévus en matériau métallique, plastique, composite ou autre.

Ces quatre poutres 29-32 sont ainsi disposées selon un agencement rectangulaire, auquel sont raccordés les pieds 12-17 assurant le maintien de l'ensemble sur le plancher 8. La fixation des poutres 29-32 entre elles et avec les pieds 12-17 sont assurés par des éléments de raccordement de type coudes ou analogues recevant chacun une extrémité de poutre.

Sur les figures 8 à 11, la sangle 19 est passée autour des poutres avant 31 et arrières 32 en ayant ses extrémités raccordées l'une à l'autre, de manière à constituer une boucle enserrant ces poutres 31 et 32 en s'étendant longitudinalement, c'est-à-dire parallèlement aux poutres latérales 29 et 30.

Les extrémités de la sangle 19 sont raccordées l'une à l'autre par une attache 33 permettant de refermer la boucle tout en mettant cette sangle en tension. Cette attache qui est ici située à mi-longueur de la partie inférieure de la boucle formée par la sangle, et par exemple une attache encliquetable permettant un montage de la sangle aisé pour un opérateur d'assemblage.

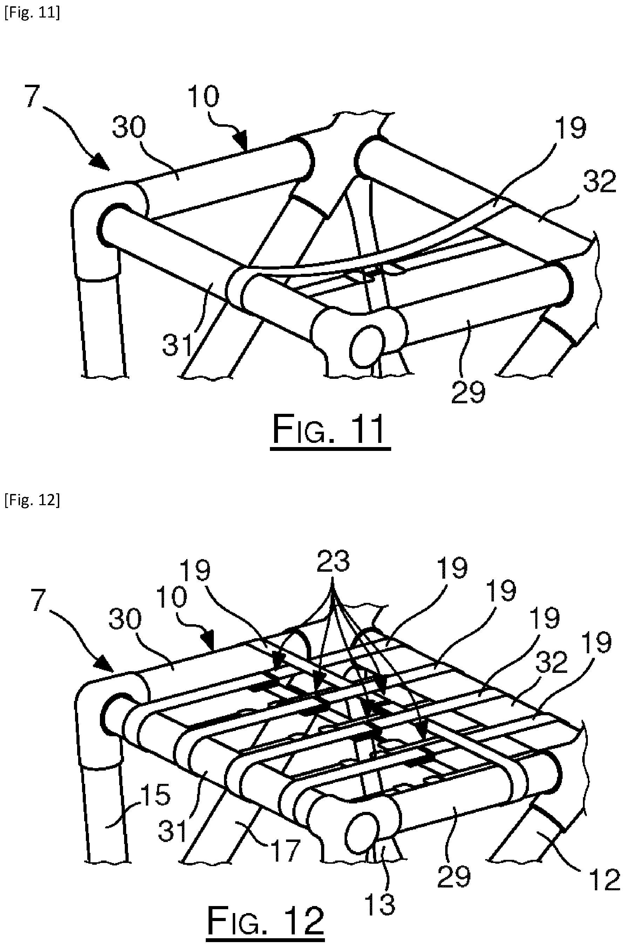

La portion d'amortissement 23 de la sangle 19 est située à mi-longueur de la partie supérieure de la boucle formée par cette sangle 19. En pratique, et comme visible sur la figure 12, quatre sangles 19 sont montées de la même manière autour des poutres avant et arrière en s'étendant longitudinalement, parallèlement les unes aux autres, et en étant régulièrement espacées les unes des autres selon la direction transverse.

Une sangle 19 additionnelle transversale enserre les poutres latérales 29 et 30 de manière analogue, c'est-à-dire en formant elle aussi une boucle, et en s'étendant perpendiculairement aux boucles formées par les quatre sangles 19 orientées longitudinalement.

En pratique, l'armature inférieure 10 avec les sangles 19 qui l'enserrent est recouverte d'éléments de mousse et d'un tissu d'habillage formant le coussin inférieur 11 recevant le postérieur de l'occupant du siège. Ce coussin 11 repose ainsi sur le jeu de sangle 19 qui ceignent l'armature 10 de d'assise 7.

En cas de choc vertical vers le bas, l'occupant installé dans le siège 6 exerce de par sa masse des efforts importants sur le coussin de l'assise sur laquelle il est en appui, et par là-même sur l'ensemble des sangles 19 portant ce coussin. Ces efforts verticaux dirigés vers le bas se traduisent par des efforts de tension élevés dans les sangles 19, qui engendrent la rupture progressive des coutures liant leurs portions d'amortissement, de sorte que ces sangles s'allongent en absorbant une partie de l'énergie du choc.

Plus particulièrement, lors de l'impact, c'est-à-dire au début du choc, l'accroissement rapide et important des efforts de tension dans les sangles 19 engendre la rupture de premiers points de coutures des portions d'amortissement 23, ce qui correspond à la situation illustrée sur les figures 4, 9 et 13. Durant cette phase, les sangles commencent à s'allonger au fur et à mesure que leurs points de coutures cèdent les uns après les autres, en absorbant de l'énergie.

Au fur et à mesure que le choc continue, c'est-à-dire durant le choc, les autres points de coutures cèdent, de sorte que les sangles continuent d'absorber de l'énergie en s'allongeant au fur et à mesure que leurs portions d'amortissement 23 continuent de s'ouvrir, ce qui correspond aux figures 5, 10 et 14.

En fin de choc, comme illustré sur les figures 6, 11 et 15, les portions d'amortissement sont complètement ouvertes du fait que tous les points de couture ont cédé, et les sangles 19 ont leurs longueurs maximales.

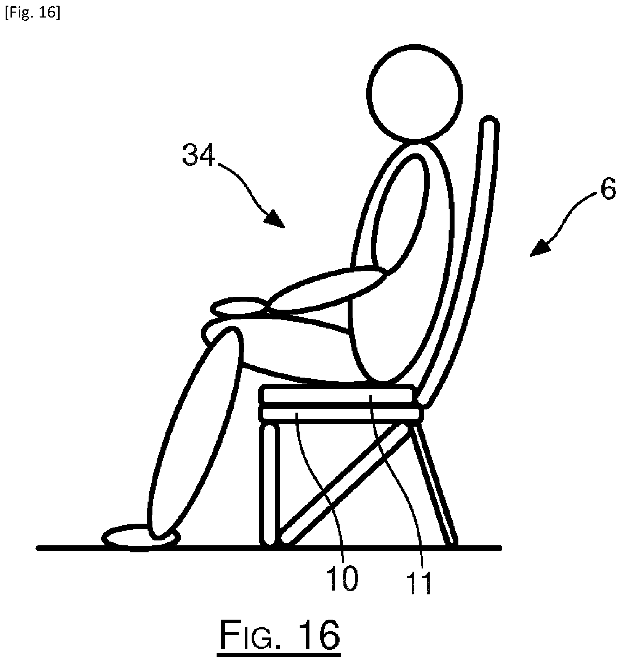

Comme visible sur les figures 16 à 18, lorsqu'un occupant 34 est installé dans le siège selon l'invention, et qu'il est soumis à un choc vertical vers le bas, la rupture des portions d'amortissement 23 des différentes sangles 19 augmente les longueurs de ces sangles, de sorte que le coussin 11 porté par ces sangles 19 s'enfonce dans l'armature 10 avec l'occupant.

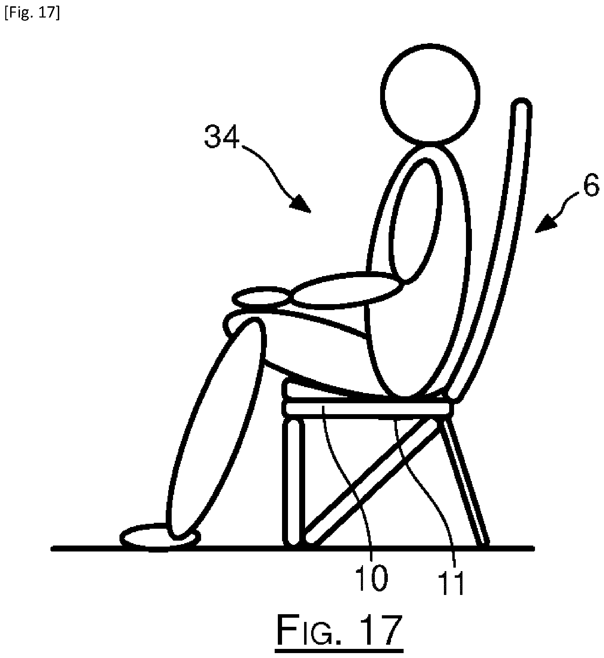

Ainsi, à l'état normal comme sur la figure 16, le coussin 11 est situé essentiellement au-dessus de l'armature 10, et au fur et à mesure que le choc se déroule, il s'enfonce dans l'armature 10 pendant que les coutures des portions d'amortissement 23 se déchirent progressivement, comme visible sur la figure 17.

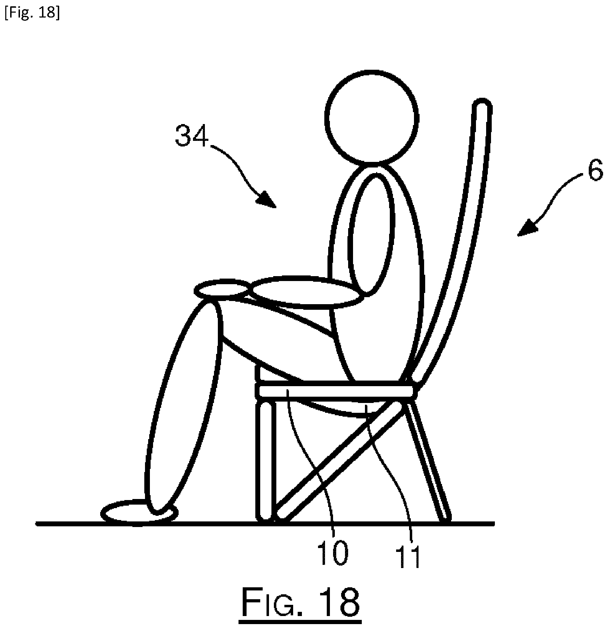

En fin de choc, la partie centrale du coussin peut être située sensiblement sous le niveau des poutres constituant l'armature 10, comme illustré sur la figure 18.

Dans l'exemple des figures 12 à 15, l'assise est équipée de quatre sangles longitudinales et d'une sangle transversale, mais d'une manière générale, le nombre de sangles choisi et leur disposition dépendent de la conception du siège et des conditions du test devant être passé.

Comme on l'aura compris, le choix du nombre de sangles permet d'optimiser la performance au test en question, de même que la largeur de ces sangles, que la longueur des parties repliées formant les portions d'amortissement, la densité des coutures, et la résistance à la rupture du fil utilisé de ces coupures.

Dans l'exemple des figures, chaque sangle comporte une portion d'amortissement, mais il est possible de prévoir que ces sangles comportent plusieurs portions d'amortissement, pouvant le cas échéant être cousues avec des fils ayant des résistances à la rupture différentes.

Dans ce cas, la portion d'amortissement cousu avec le fil de plus faible tension se déchire en premier lieu durant un choc, après quoi la ou les autres portions d'amortissement cousues avec du fil de plus grande résistance cèdent, ce qui permet d'optimiser la dynamique d'absorption du choc.

## Revendications

1. Siège (6) d'aéronef, comprenant une assise (7) incluant un coussin (11) porté par une armature (10) ainsi que des pieds (12-17) portant cette armature (10), cette armature (10) comprenant au moins deux poutres (29-32) longeant deux bords opposés du coussin (11), le coussin (11) étant porté par plusieurs sangles (19) s'étendant d'une poutre (29-32) à l'autre, dans lequel au moins une sangle (19) comporte une portion d'amortissement (23), cette portion d'amortissement (23) comprenant une partie repliée (24) dans laquelle deux régions consécutives d'une même face de cette sangle (19) se longent en étant solidarisées l'une à l'autre par des coutures (26), afin que ces coutures se rompent lorsque la sangle (19) subit des efforts de tension (T1, T2) élevés
et dans lequel au moins une sangle (19) forme une boucle entourant deux poutres (29-32).

2. Siège (6) selon l'une des revendications précédentes, comprenant au moins une sangle (19) équipée d'une attache (33) encliquetable reliant ses deux extrémités pour former une boucle.

3. Siège (6) selon l'une des revendications précédentes, dans lequel l'armature (10) comporte deux poutres latérales (29, 30) et deux poutres transversales (31, 32) agencées selon une forme rectangulaire longeant les bords du coussin, et comprenant d'une part des sangles (19) s'étendant d'une poutre transversale (31, 32) à l'autre, et d'autre part des sangles (19) s'étendant d'une poutre latérale (29, 30) à l'autre.

4. Siège (6) selon l'une des revendications précédentes, comprenant au moins une sangle (19) ayant une portion d'amortissement (23) dont la partie repliée (24) est rabattue le long du reste de cette sangle (19).

5. Siège (6) selon l'une des revendications précédentes, comprenant une sangle (19) pourvue de plusieurs portions d'amortissement (23).

## Patentansprüche

1. Flugzeugsitz (6), der eine Sitzfläche (7) einschließlich einer Polsterung (11), die von einem Rahmen (10) getragen wird, sowie Beine (12-17), die den Rahmen (10) tragen, umfasst, wobei der Rahmen (10) mindestens zwei Trägerbalken (29-32) entlang zweier gegenüberliegender Kanten der Polsterung (11) umfasst, wobei die Polsterung (11) von mehreren Gurtbändern (19) getragen wird, die sich von einem Gurtband (29-32) zum anderen erstrecken, wobei mindestens ein Gurtband (19) einen Dämpfungsabschnitt (23) umfasst, wobei der Dämpfungsabschnitt (23) einen zusammengefalteten Teil (24) umfasst, in dem zwei aufeinanderfolgende Bereiche einer gleichen Seite des Gurtbandes (19) aneinander entlang verlaufen und durch Nähte (26) fest miteinander verbunden sind, so dass diese Nähte reißen, wenn das Gurtband (19) hohen Zugkräften (T1, T2) ausgesetzt wird,
und wobei mindestens ein Gurtband (19) eine Schleife bildet, die zwei Trägerbalken (29-32) umgibt.

2. Sitz (6) nach einem der vorhergehenden Ansprüche, der mindestens ein Gurtband (19) umfasst, das mit einer einrastbaren Klammer (33) ausgestattet ist, die seine beiden Enden verbindet, um eine Schlaufe zu bilden.

3. Sitz (6) nach einem der vorhergehenden Ansprüche, wobei der Rahmen (10) zwei seitliche Trägerbalken (29, 30) und zwei Querträgerbalken (31, 32) umfasst, die in einer rechteckigen Form entlang der Kanten der Polsterung angeordnet sind und einerseits Gurtbänder (19), die sich von einem Querträgerbalken (31, 32) zum anderen erstrecken, und andererseits Gurtbänder (19) umfassen, die sich von einem seitlichen Trägerbalken (29, 30) zum anderen erstrecken.

4. Sitz (6) nach einem der vorhergehenden Ansprüche, der mindestens ein Gurtband (19) mit einem Dämpfungsabschnitt (23) umfasst, dessen zusammengefalteter Teil (24) entlang des Rests des Gurtbands (19) umgeschlagen ist.

5. Sitz (6) nach einem der vorhergehenden Ansprüche, der ein Gurtband (19) umfasst, das mit mehreren Dämpfungsabschnitten (23) versehen ist.

## Claims

1. An aircraft seat (6), comprising a seating (7) including a cushion (11) carried by a frame (10) as well as feet (12-17) carrying this frame (10), this frame (10) comprising at least two beams (29-32) housing two opposite edges of the cushion (11), the cushion (11) being carried by several straps (19) extending from one beam (29-32) to the other, wherein at least one strap (19) includes a damping portion (23), this damping portion (23) comprising a folded part (24) in which two consecutive regions of the same face of this strap (19) being housed while being secured to each other via seams (26), so that these seams break when the strap (19) undergoes high tensile stresses (T1, T2) and wherein at least one strap (19) forms a loop surrounding two beams (29-32).

2. The seat (6) according to one of the preceding claims, comprising at least one strap (19) equipped with a snap-on fastener (33) connecting the two ends thereof to form a loop.

3. The seat (6) according to one of the preceding claims, wherein the frame (10) includes two lateral beams (29, 30) and two transverse beams (31, 32) arranged in a rectangular shape housing the edges of the cushion, and comprising, on the one hand, straps (19) extending from one transverse beam (31, 32) to the other and, on the other hand, straps (19) extending from one lateral beam (29, 30) to the other.

4. The seat (6) according to one of the preceding claims, comprising at least one strap (19) having a damping portion (23) whose folded part (24) is folded down along the remainder of this strap (19).

5. The seat (6) according to one of the preceding claims, comprising a strap (19) provided with several damping portions (23).
